(19) Europäisches Patentamt
European Patent Office
Office européen des brevets

(11) Publication number: **0 332 052 A2**

(12) **EUROPEAN PATENT APPLICATION**

(21) Application number: 89103674.1

(51) Int. Cl.4: C08K 5/32 , C08L 21/00

(22) Date of filing: 02.03.89

(30) Priority: 07.03.88 JP 54480/88
05.01.89 JP 1080/89

(43) Date of publication of application:
13.09.89 Bulletin 89/37

(84) Designated Contracting States:
DE FR GB IT

(71) Applicant: SUMITOMO CHEMICAL COMPANY, LIMITED
Kitahama 4-chome 5-33
Chuo-ku Osaka 541(JP)

(72) Inventor: Kurimoto, Isao
32-1-8-108, Sonehigashinocho-2-chome
Toyonaka-shi(JP)
Inventor: Yamaguchi, Tetsuo
30-333, Korigaoka-8-chome
Hirakata-shi(JP)
Inventor: Inui, Naoki
1598, Tsutsuicho
Yamatokoriyama-shi(JP)
Inventor: Nagasaki, Hideo
7-7, Itakano-4-chome
Higashiyodogawa-ku Osaka(JP)
Inventor: Yachigo, Shinichi
10-5-406, Sonehigashinocho-2-chome
Toyonaka-shi(JP)

(74) Representative: Henkel, Feiler, Hänzel & Partner
Möhlstrasse 37
D-8000 München 80(DE)

(54) **Method for improving rubber vibration isolator properties.**

(57) A rubber vibration isolator lowered in the dynamic-to-static modulus ratio and improved in the durability is obtained by blending a natural rubber and/or a synthetic rubber with a filler and a dinitrodiamine compound represented by the formula of

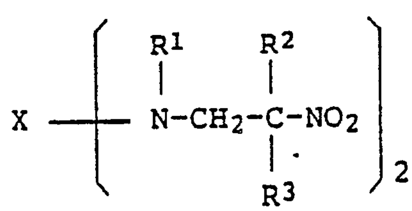

(I)

wherein X is a divalent aliphatic, alicyclic or aromatic group which may contain halogen or oxygen in the group, $R^1$ is hydrogen, an aliphatic group, an alicyclic group or an aromatic group, with the proviso that two nitrogen atoms linking through X may further link through $R^1$ when both X and $R^1$ are the aliphatic groups, and $R^2$ and $R^3$ independently of one another are each hydrogen or an alkyl of 1 to 12 carbon atoms, with the proviso that $R^2$ and $R^3$ may conjointly form a ring.

EP 0 332 052 A2

# METHOD FOR IMPROVING RUBBER VIBRATION ISOLATOR PROPERTIES

The present invention relates to a method for improving rubber vibration isolator properties, particularly for lowering a dynamic-to-static modulus ratio of the rubber and for improving the durability of the rubber, and also to a rubber vibration isolator prepared by that method.

Various rubber vibration isolators are generally used for prevention of noise and vibration in traffic means such as automobiles and motorbikes and in industrial machines. Especially in the recent field of automobiles, important tasks to be attained are improvement in comfortableness to ride combined with improvements in economy such as the reduction of fuel consumption and others. Thus, importance of rubber vibration isolators has further increased from the standpoint of vibration, noise and stability in driving, and properties required therefor are gradually changing to a higher level.

Properties required for the rubber vibration isolator are as follows:

(1) to have a hardness higher than a specific level for carrying a huge static load;

(2) to have a low vibration transmissibility, specifically to have a high loss factor (tan $\delta$) for vibration in a low frequency region, namely, idling vibration or vibration during low speed driving, and to have a low dynamic-to-static modulus ratio (dynamic modulus of elasticity/static modulus of elasticity) for noise and vibration in a high frequency region, namely, during high speed driving; and

(3) to be excellent in resistance to flexural fatigue and durability against external force repeatedly applied for a prolonged period.

Furthermore, it is also important that the static fatigue resistance such as compression set is not inferior to that of ordinary rubbers.

Hardness of rubbers may be enhanced normally by increased amount of fillers such as carbon black or vulcanizers such as sulfur. However, in the former case, resistance to heat build-up of the vulcanized rubber is deteriorated resulting reduction in durability, and further the dynamic-to-static modulus ratio is markedly increased. In the latter case, the loss factor is markedly decreased and the fatigue resistance is also deteriorated. Thus, according to these methods, the above requirements are not sufficiently satisfied.

Under these circumstances, proposals have been made to provide rubber materials with high in hardness, superior in vibration absorbing characteristics and fatigue characteristics. For example, Japanese Patent Kokai Nos. 56-122846 and 56-166241 disclose compositions comprising a natural rubber or diene synthetic rubber in which is incorporated a polymer having a specific functional group. Further, U.S. Patent No. 4,294,732 discloses a composition comprising a natural rubber or diene synthetic rubber in which is incorporated an oil-modified phenolic resin. Moreover, Japanese Patent Kokai No. 57-87406 discloses a diene synthetic rubber having a specific microstructure.

On the other hand, improvement in shapes or structures of rubber vibration isolators has also been attempted, and the loss factor (tan $\delta$) among the vibration absorbing characteristics has become capable to be adjusted in a very wide range by the development of a mount filled with a liquid such as ethylene glycol or propylene glycol.

However, the above-mentioned methods to incorporate the specific polymer, to incorporate the oil-modified phenolic resin and to use the synthetic rubber having a specific microstructure leave the problem that they are not effective to improve the vibration absorbing characteristics which are the most important characteristics of rubber vibration isolators, especially to lower the dynamic-to-static modulus ratio, though they may improve the hardness and fatigue resistance.

Further, with reference to the liquid-containing mount, though the loss factor among the vibration absorbing characteristics can be adjusted in a wide range, the dynamic-to-static modulus ratio depends on the properties of the rubber used for the body of the mount, and hence the dynamic-to-static modulus ratio cannot be lowered below that of conventional rubber vibration isolators. Therefore, the method using a liquid-containing mount is not necessarily satisfactory for satisfying requirement for characteristics which has recently become higher in grade, especially requirement for the reduction of dynamic-to-static modulus ratio of rubber vibration isolators.

Thus, there has not been made conspicuous improvements in the reduction of dynamic-to-static modulus ratio of rubber vibration isolators.

Further, although there has become stronger demand in recent years for prolonging the life of automobile parts, the conventional methods have been difficult to achieve both of the reduction in dynamic-to-static modulus ratio and the improvement in durability.

Under such background, the inventors have made intensive research in an attempt for rubber vibration isolators to attain simultaneously reduction of dynamic-to-static modulus ratio and improvement in durability

under maintaining such characteristics as hardness and compression set to be in the same level as those required for conventional rubber vibration isolators. As a result, it has been found that improvements in the above required characteristics, especially in reduction of the dynamic-to-static modulus ratio and improvement in durability can be achieved by a noble method of adding a compound having a specific structure and the present invention has been accomplished.

Thus, the present invention provides a method for improving rubber vibration isolator properties, particularly lowering a dynamic-to-static modulus ratio of the rubber and improving the durability of the rubber, which comprises blending a natural rubber and/or a synthetic rubber with a filler and a dinitrodiamine compound represented by the formula (I),

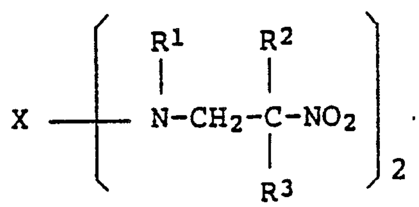

(I)

wherein X is a divalent aliphatic, alicyclic or aromatic group which may contain halogen or oxygen in the group, $R^1$ is hydrogen, an aliphatic group, an alicyclic group or an aromatic group, with the proviso that two nitrogen atoms linking through X may further link through $R^1$ when both X and $R^1$ are the aliphatic groups, and $R^2$ and $R^3$ independently of one another are each hydrogen or an alkyl of 1 to 12 carbon atoms, with the proviso that $R^2$ and $R^3$ may conjointly form a ring.

The present invention also provides a rubber vibration isolator lowered in the dynamic-to-static modulus ratio and improved in the durability, which is prepared by blending a natural rubber and/or a synthetic rubber with a filler and a dinitrodiamine compound represented by the formula (I).

It has been known from European Patent Publication No. 253365 that the dinitrodiamines represented by the formula (I) are compounds which improve dynamic properties of rubbers, but it has been found out for the first time by the present invention that these compounds are effective for lowering dynamic-to-static modulus ratios and improving durability of rubbers.

The dinitrodiamines represented by the formula (I) can be prepared by using a diamine, a nitroalkane and formaldehyde as starting materials, and subjecting them to a condensation reaction in an inert solvent. In this case, a small amount of an alkaline compound may be used as a catalyst to accelerate the reaction.

As examples of the dinitrodiamines, mention may be made of the following compounds, wherein -Z represents

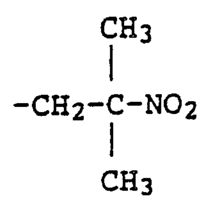

.

(1) $Z-NH{\leftarrow}CH_2{\rightarrow}_2$ NH-Z
(2) $Z-NH{\leftarrow}CH_2{\rightarrow}_3$ NH-Z
(3) $Z-NH{\leftarrow}CH_2{\rightarrow}_4$ NH-Z
(4) $Z-NH{\leftarrow}CH_2{\rightarrow}_6$ NH-Z
(5) $Z-NH{\leftarrow}CH_2{\rightarrow}_{10}$ NH-Z
(6) $Z-NH{\leftarrow}CH_2{\rightarrow}_{12}$ NH-Z
(7) 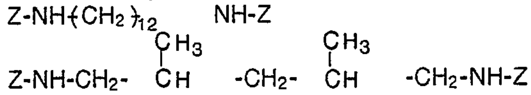
(8) $NO_2{\leftarrow}CH_2{\rightarrow}_2$ $NH{\leftarrow}CH_2{\rightarrow}_2$ $NH{\leftarrow}CH_2{\rightarrow}_2$ $NO_2$
(9) $NO_2{\leftarrow}CH_2{\rightarrow}_2$ $NH{\leftarrow}CH_2{\rightarrow}_6$ $NH{\leftarrow}CH_2{\rightarrow}_2$ $NO_2$
(10) 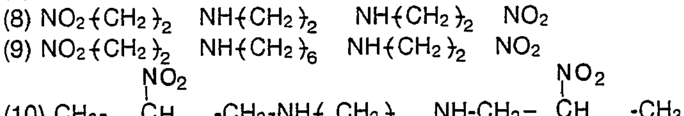
(11) 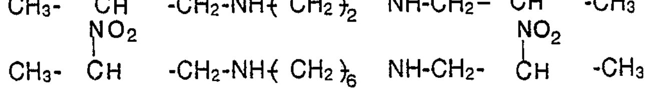

(12) 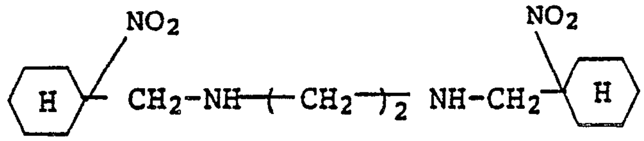

(13) 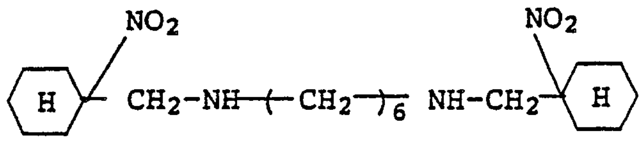

(14) 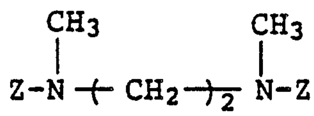

(15) 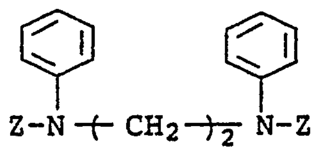

(16) 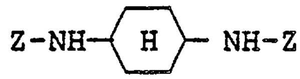

(17) 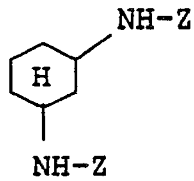

(18) 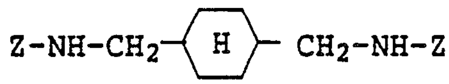

(19) 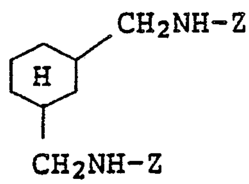

(20) 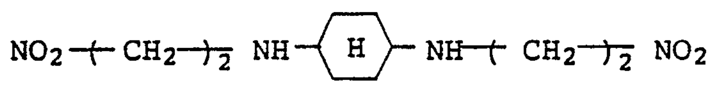

(21) 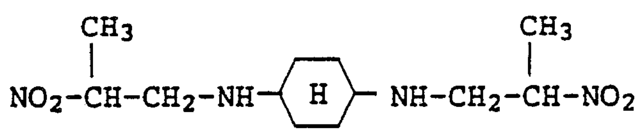

(22) 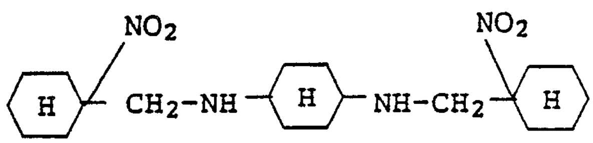

(23) 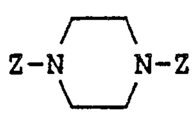

(24) 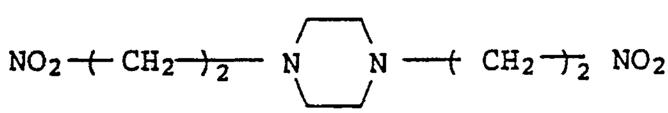

(25) 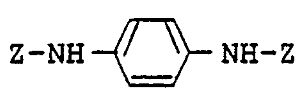

(26) 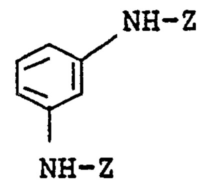

(27) 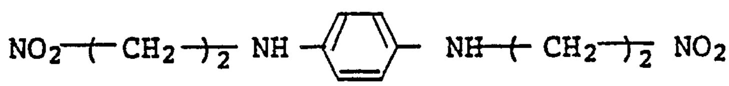

(28) 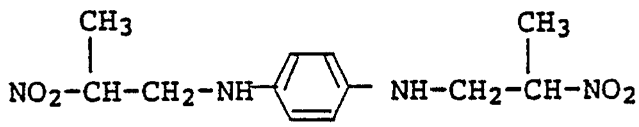

(29) 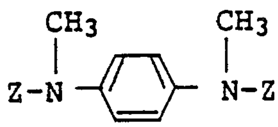

(30) 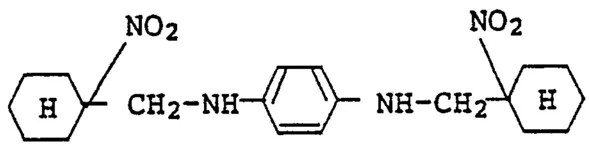

(31) 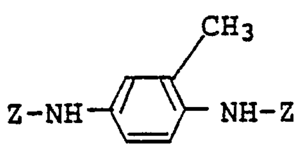

(32) 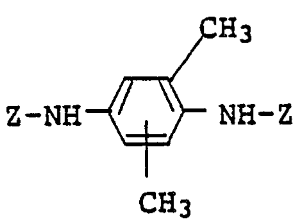

(33) 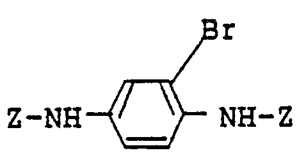

(34) 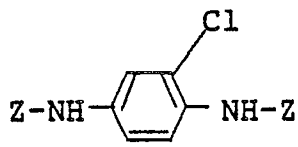

(35) 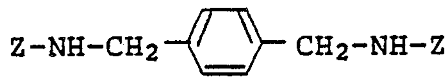

(36) 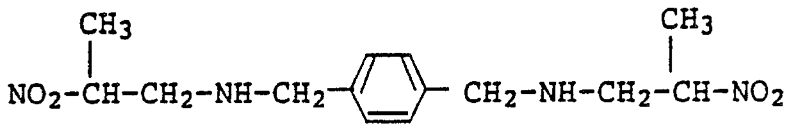

(37) 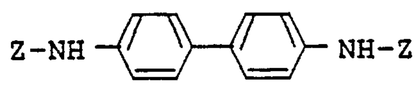

(38) 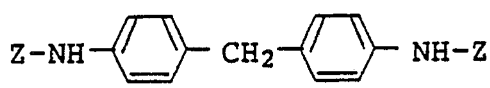

(39) 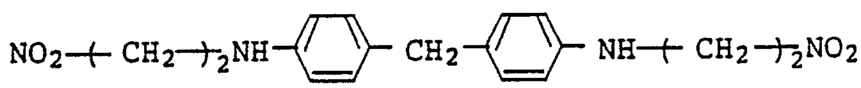

(40) 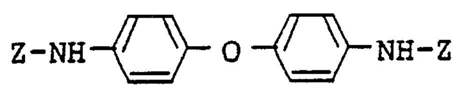

(41) 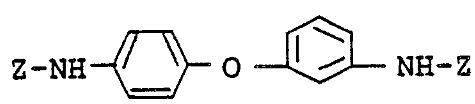

(42) 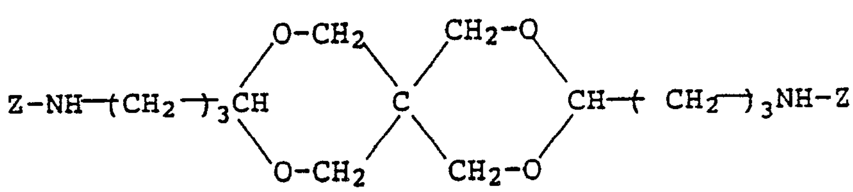

(43) 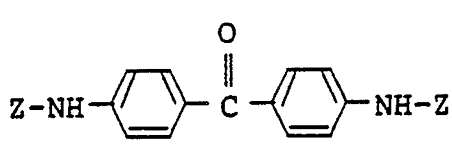

(44) 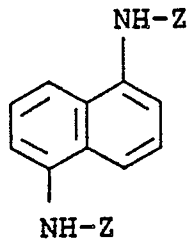

(45) 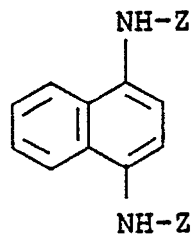

(46) 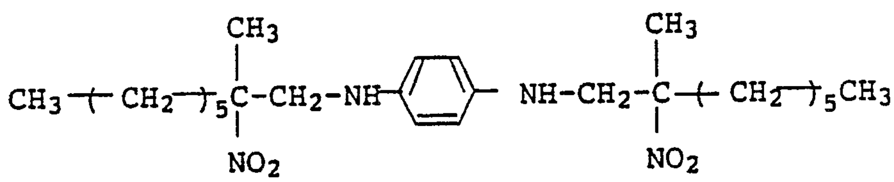

(47) 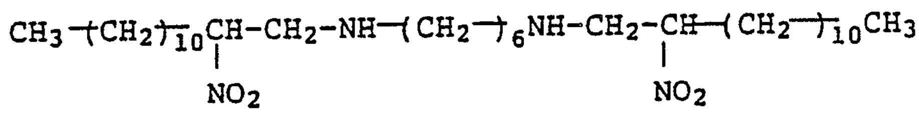

(48) 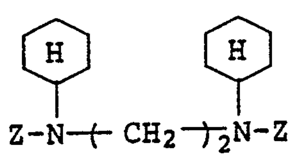

As exemplified above, the bridging group X in the formula (I) is a divalent aliphatic, alicyclic or aromatic group. X may contain halogen (e.g. fluorine, chlorine, bromine and iodine) in the group like the 33rd and 34th examples, and alternatively may contain oxygen in the group like the 40th to 43rd examples. The divalent aliphatic group denoted by X includes, for example, a straight chain or branched chain group, preferably an alkylene, of 1 to 18 carbon atoms and the like. The divalent alicyclic group denoted by X includes, for example, cyclohexylene,

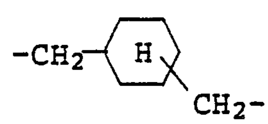 ,

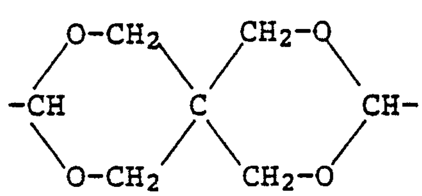

and the like. The divalent aromatic group denoted by X includes, for example, phenylene unsubstituted or

substituted once or twice by lower alkyl (e.g. methyl) or halogen (e.g. chlorine or bromine),

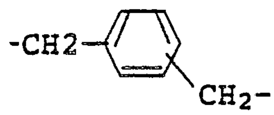 , 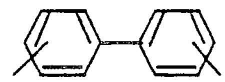 ,

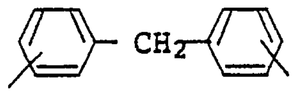 , 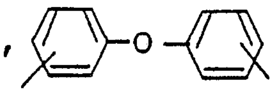 , 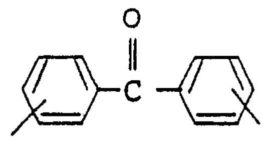 ,

naphthylene and the like. Among them, preferred X is the aliphatic group. More preferably, X is the aliphatic group, particularly the alkylene, of 4 to 12 carbon atoms.

$R^1$ in the formula (I) is hydrogen, an aliphatic group, an alicyclic group or an aromatic group. The aliphatic group denoted by $R^1$ includes an alkyl of 1 to 6 carbon atoms and the like, the alicyclic group denoted by $R^1$ includes cyclopentyl, cyclohexyl and the like, and the aromatic group denoted by $R^1$ includes phenyl, tolyl and the like. Among them, preferred $R^1$ is hydrogen, the alkyl, cyclohexyl or phenyl, and more preferred is hydrogen. Alternatively, in case both X and $R^1$ are the aliphatic groups, two nitrogen atoms linking through X can further link through $R^1$ to form a ring composed of X, $R^1$ and two nitrogen atoms like the above 23rd and 24th examples. Such rings include, for example, piperazine ring and the like.

$R^2$ and $R^3$ in the formula (I) can be the same or different each other, and are hydrogen or an alkyl of 1 to 12 carbon atoms. Preferably, at least one of $R^2$ and $R^3$ is an alkyl of 1 to 12 carbon atoms, and more preferably they are both methyl. Alternatively, $R^2$ and $R^3$ can conjointly link to form, together with carbon atoms bonding to them, rings such as six-membered rings, like the above 12th, 13th, 22nd and 30th examples.

Such the dinitrodiamines can be used as improvers for rubber vibration isolator properties in any forms of a single compound, a mixture of two or more of the compounds, a mixture with a carrier such as clay which does not affect the properties of rubber, or a mixture with other additives. Thus, the dinitrodiamine can be blended with rubber in any forms as mentioned above.

The amount of the dinitrodiamine to be blended with rubber is not critical, but vibration isolator properties is insufficient if it is too small, and the effect on improving the rubber is saturated and is uneconomical if it is too large. Thus, the amount is preferably 0.1 - 10 parts by weight per 100 parts by weight of rubber.

As fillers used in the present invention, there may be exemplified carbon black, silica, talc, clay and the like, and carbon black is preferred from viewpoints of the fatigue characteristics and fracture characteristics. These fillers are used at a similar blending ratio to that has been conventionally employed, and the ratio is not specially restricted in the present invention. Kinds of carbon black and the like are also not critical in the present invention, and various fillers different in reinforcing properties may be used as usual.

Rubbers usable in the present invention include, for example, natural rubbers and various kinds of synthetic rubbers such as polyisoprene rubber (IR), styrene-butadiene copolymer rubber (SBR), polybutadiene rubber (BR), acrylonitrile-butadiene copolymer rubber (NBR) and isoprene-isobutylene copolymer rubber (IIR). Preferred ones are natural rubbers and polymer blends mainly composed of, preferably 50% by weight or more of, natural rubbers with consideration for the vibration absorbing properties and fatigue resistance.

In general, compounding additives are blended with natural rubbers or synthetic rubbers in two steps. That is, fillers, process oils, stearic acid, etc. are blended with the rubber at the first step of relatively high rubber temperatures of about 120 - 170 °C, and vulcanization accelerators and vulcanizing agents are blended at the second step of relatively low rubber temperatures of about 30 - 120 °C.

Blending of the dinitrodiamine of the present invention can be effected at optional stages. For example, it may be blended at either the first step or the second step mentioned above or at other steps. However, it is generally preferred to blend it at the first step when fillers etc. are blended. With reference to the blending temperature, the effect on improvements in rubber vibration isolators becomes greater with higher blending temperatures, but a too high blending temperature causes deterioration of the rubber by oxidation so that a temperature of 200 °C or lower is normally employed. In this stage, for further improvement of the effect, a small amount of a vulcanization accelerator and/or a vulcanizing agent such as morpholine disulfide may be blended as an auxiliary agent.

When the dinitrodiamine and fillers such as carbon black are blended with rubber, there may occur increase of the torque and activation of the vulcanization, and so a peptizer or a retarder may be used

combinedly in order to moderate the actions. Furthermore, if necessary, ordinary rubber chemicals and softening agents may also be added.

The rubber composition thus obtained is formed to a rubber vibration isolator by molding it to a suitable shape or bonding it to a metal.

The following examples for preparation of the dinitrodiamines represented by the formula (I) and for evaluating the properties of rubber vibration isolators containing the dinitrodiamine will explain the present invention in more specifically, but they are not limitative for the present invention.

Preparation Example 1

To 156.8 g (1.76 mol) of 2-nitropropane charged in a one liter four-necked flask equipped with a stirrer, a thermometer and a condenser were added 200 ml of methanol as a solvent and 16.7 g (0.04 mol) of a methanolic solution of 40% trimethylbenzylammonium hydroxide as a catalyst. The mixture was heated to 50 °C and kept at that temperature. Then, thereto was added dropwise 136.3 g (1.68 mol) of 37% formalin over about 1 hour. The reaction mass was then heated to 60 °C and thereto was added dropwise a solution of 86.5 g (0.8 mol) of p-phenylenediamine in 500 ml of methanol (40 °C) over a period of about 1 hour. After completion of the addition, the reaction mass was kept at 60 °C for about 4 hours. As the result, the reaction product crystallized and the reaction mass became a slurry.

The reaction mass was gradually cooled to 5 °C and the crystals were collected by filtration. The crystals were washed with methanol and water and dried under reduced pressure at 50 °C or lower to obtain 226.3 g of N,N′-bis(2-methyl-2-nitropropyl)-1,4-diaminobenzene (yield based on p-phenylenediamine: 91.1%). The compound obtained was a pale yellow crystal and had melting point of 135 - 137 °C. This compound is referred to as compound A.

Results of the elemental analysis of the compound were as follows:

| | C | H | N |
|---|---|---|---|
| Found: | 54.13% | 7.22% | 18.09% |
| Calcd.: | 54.18% | 7.14% | 18.05% |

It was confirmed from the FD-mass analysis, NMR spectrum and the identification by IR spectra that the above compound had the following structural formula:

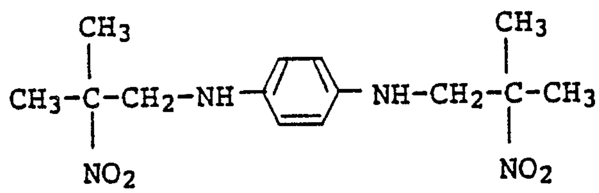

The following compounds B to E were prepared in the same manner as the above except that the starting materials were changed.

Compound B: N,N′-bis(2-nitropropyl)-1,3-diaminobenzene Compound C: N,N′-bis(2-methyl-2-nitroporpyl)-4,4′-diaminodiphenylmethane Compound D: N,N′-bis(1-nitrocyclohexylmethyl)-4,4′-diaminodiphenylether Compound E: N,N′-bis(2-methyl-2-nitrooctyl)-1,4-diaminobenzene

Preparation Example 2

In a one liter four-necked flask equipped with a stirrer, a thermometer and a condenser were charged 116.2 g (1.0 mol) of 1,6-diaminohexane, 178.2 g (2.0 mols) of 2-nitropropane and 140 g of methanol. To the mixture under stirring was added dropwise 162.3 g (2.0 mols) of 37% formalin at 45 - 55 °C over 1 hour. After completion of the addition of formalin, the mixture was kept at the above temperature for 1 hour and was separated into layers with addition of 200 ml of water.

The oil layer was washed with 200 ml of water and then concentrated under the conditions of 60 °C and

30 Torr to obtain 304 g of a pale yellow liquid. The high-performance liquid chromatography assay of the compound showed that it contained 298 g of N,N′-bis(2-methyl-2-nitropropyl)-1,6-diaminohexane and 5 g of 2-nitropropane.

To that liquid were added 300 ml of n-hexane and 150 ml of toluene and the resulting solution was cooled to 5 °C resulting in precipitation of crystals to form a slurry. The mixture was filtered and the collected crystals were washed with 100 ml of cold n-hexane and vacuum dried at 20 °C or lower to obtain 288 g of N,N′-bis(2-methyl-2-nitropropyl)-1,6-diaminohexane. The compound was a pale yellow crystal with melting point of 26 - 27 °C. This compound is referred to as compound F.

Results of the elemental analysis of this compound are as follows:

| | C | H | N |
|---|---|---|---|
| Found: | 52.69% | 9.45% | 17.57% |
| Calcd.: | 52.81% | 9.50% | 17.60% |

The following compounds G to L were prepared in the same manner as the above except that the starting materials were changed.
Compound G: N,N′-bis(2-methyl-2-nitropropyl)-1,2-diaminoethane Compound H: N,N′-bis(2-methyl-2-nitropropyl)-1,12-diaminododecane Compound I: N,N′-bis(2-methyl-2-nitropropyl)-1,18-diaminooctadecane Compound J: N,N′-bis(2-nitropropyl)-1,6-diaminohexane Compound K: N,N′-bis(2-methyl-2-nitropropyl)-1,4-bis(aminomethyl)cyclohexane Compound L: N,N′-bis(2-methyl-2-nitropropyl)piperazine

Example 1

| (Compound Formulation) | |
|---|---|
| Natural rubber (RSS #1) | 100 parts by weight |
| FEF black | 60 parts by weight |
| Stearic acid | 2 parts by weight |
| Aromatic process oil | 20 parts by weight |
| Zinc oxide | 8 parts by weight |
| Vulcanization accelerator (N-cyclohexyl-2-benzothiazolylsulfenamide) | 1 parts by weight |
| Sulfur | 2 parts by weight |
| Dinitrodiamine | as shown in Table 1 |

Using a 250 ml Laboplastomill® (manufacture of Toyo Seiki Co.) as a Bumbury's mixer, the dinitrodiamine of the present invention, carbon black, stearic acid, process oil and zinc oxide were incorporated into the natural rubber in accordance with the above compound formulation and the mixture was kneaded for 5 minutes under a mixer revolution of 60 rpm and at an oil bath temperature of 170 °C. The rubber temperature was 150 -160 °C.

The rubber composition was transferred to an open mill, then the vulcanization accelerator and sulfur as shown in the above formulation were added thereto at 40-50 °C, and the mixture was kneaded. The kneaded product was vulcanized with a vulcanizing press at 145 °C for 20 minutes to be formed into a given shape, and the obtained samples were subjected to various tests. Test methods were as follows:

(1) Hardness (JIS-A):
Measured in accordance with JIS-K-6301.

(2) Static spring constant:
Calculated from values measured in accordance with JIS-K-6383.

(3) Dynamic-to-static modulus ratio:
Measured by a viscoelasticity spectrometer at 25 °C and at vibration of 100 Hz.

(4) Flexural fatigue resistance:
Determined by using a Fatigue-to-Failure Tester (manufacture of Monsanto Co.) and measuring flex cycle until breaking under the 100% strain condition for each test piece of just after vulcanization, of heat-aged at 100 °C for 48 hours and of heat-aged at 100 °C for 96 hours.

(5) Compression set:
Determined from thickness of a test piece after heating at 100°C for 48 hours in accordance with JIS-K-6301.

Conditions for blending of the dinitrodiamine and the test results are shown in Table 1.

Table 1

| | | | | Invention | | | | | | | |
|---|---|---|---|---|---|---|---|---|---|---|---|
| | | | | 1 | 2 | 3 | 4 | 5 | 6 | 7 | 8 |
| Blend | Compound | | | A | A | B | B | C | C | D | D |
| | Amount (parts by weight) | | | 1 | 2 | 1 | 2 | 1 | 2 | 1 | 2 |
| Properties for rubber vibration isolator | Hardness | | | 55 | 56 | 55 | 55 | 55 | 56 | 55 | 55 |
| | Static spring constant (kg/mm) | | | 16.8 | 17.1 | 16.5 | 16.9 | 16.7 | 17.3 | 16.6 | 17.1 |
| | Dynamic-to-static modulus ratio | | | 1.91 | 1.82 | 1.92 | 1.82 | 1.85 | 1.77 | 1.88 | 1.79 |
| | Flexural fatigue resistance | Initial | (KC) | 60.5 | 60.0 | 70.8 | 69.8 | 58.5 | 58.0 | 61.3 | 59.2 |
| | | After 100°C × 48 hrs | (KC) | 30.8 | 29.5 | 38.7 | 37.5 | 30.2 | 29.5 | 30.1 | 29.1 |
| | | | Retention (%) | 50.9 | 49.2 | 53.4 | 53.7 | 51.6 | 50.9 | 49.1 | 49.2 |
| | | After 100°C × 96 hrs | (KC) | 14.3 | 13.8 | 20.1 | 18.3 | 13.7 | 13.7 | 13.9 | 13.1 |
| | | | Retention (%) | 23.6 | 23.0 | 28.4 | 26.2 | 23.4 | 23.6 | 22.7 | 22.1 |
| | Compression set (%) | | | 36.5 | 36.8 | 35.1 | 35.5 | 37.0 | 37.5 | 36.9 | 37.1 |

- to be cont'd -

Table 1 (Cont'd)

| Invention | | | | | | | | | | | |
|---|---|---|---|---|---|---|---|---|---|---|---|
| 9 | 10 | 11 | 12 | 13 | 14 | 15 | 16 | 17 | 18 | 19 | 20 |
| E | E | F | F | G | G | H | H | I | I | J | J |
| 1 | 2 | 1 | 2 | 1 | 2 | 1 | 2 | 1 | 2 | 1 | 2 |
| 55 | 55 | 55 | 57 | 54 | 55 | 56 | 57 | 55 | 56 | 54 | 55 |
| 16.6 | 16.8 | 17.1 | 17.5 | 16.5 | 16.7 | 16.7 | 17.3 | 16.8 | 17.2 | 16.7 | 17.0 |
| 1.89 | 1.83 | 1.83 | 1.73 | 1.91 | 1.87 | 1.89 | 1.80 | 1.85 | 1.80 | 1.89 | 1.86 |
| 59.6 | 58.4 | 62.5 | 59.8 | 58.0 | 57.6 | 73.0 | 66.2 | 57.8 | 57.8 | 57.0 | 56.6 |
| 29.7 | 26.3 | 31.2 | 30.3 | 29.5 | 28.8 | 40.3 | 37.5 | 28.1 | 28.0 | 27.0 | 26.8 |
| 49.8 | 45.0 | 49.9 | 50.7 | 50.9 | 50.0 | 55.2 | 56.6 | 48.6 | 48.4 | 47.4 | 47.3 |
| 12.9 | 12.8 | 14.6 | 14.2 | 15.1 | 14.2 | 22.4 | 19.5 | 14.2 | 13.8 | 13.3 | 13.7 |
| 21.6 | 21.9 | 23.4 | 23.7 | 26.0 | 24.7 | 30.7 | 29.5 | 24.6 | 23.9 | 23.3 | 24.2 |
| 37.3 | 37.8 | 36.6 | 37.2 | 38.1 | 38.5 | 34.8 | 35.8 | 38.0 | 37.8 | 37.5 | 37.2 |

- to be cont'd -

Table 1 (Cont'd)

| | Invention | | | | Comparison |
|---|---|---|---|---|---|
| | 21 | 22 | 23 | 24 | 25 |
| | K | K | L | L | - |
| | 1 | 2 | 1 | 2 | - |
| | 55 | 55 | 55 | 56 | 54 |
| | 16.9 | 16.9 | 16.9 | 17.2 | 16.5 |
| | 1.91 | 1.88 | 1.90 | 1.86 | 1.99 |
| | 67.5 | 60.4 | 59.4 | 58.7 | 57.5 |
| | 33.2 | 29.5 | 29.0 | 28.2 | 21.3 |
| | 49.2 | 48.8 | 48.8 | 48.0 | 37.0 |
| | 15.4 | 13.8 | 14.0 | 13.6 | 8.3 |
| | 22.8 | 22.8 | 23.6 | 23.2 | 14.4 |
| | 35.4 | 36.0 | 36.7 | 37.3 | 37.9 |

Example 2

Using a 250 ml Laboplastomill® (manufacture of Toyo Seiki Co.) as a Bumbury's mixer, the dinitrodiamine of the present invention, carbon black, stearic acid, process oil and zinc oxide were incorporated into the rubber in accordance with the compound formulation shown in Table 2, and the mixture was kneaded for 5 minutes under a mixer revolution of 60 rpm and at an oil bath temperature of 170°C. The rubber temperature was 150 - 160°C.

The rubber composition was transferred to an open mill, then the vulcanization accelerator, sulfur and antioxidant shown in Table 2 were added thereto at 40 - 50°C, and the mixture was kneaded. The kneaded product was vulcanized with a vulcanizing press at 145°C for a period as shown in Table 2 to be formed into a given shape, and the obtained samples were subjected to a repeated compression test.

The repeated compression test was conducted with the use of a fatigue tester for rubber vibration isorator (manufacture of Itoh Seiki Co.) by repeatedly applying a strain between 0% and 40% in 1200 cycles/min, and the initial stress and the stress after 40 minutes were measured. Further, the retention of stress after 40 minutes was calculated. The higher retention means a higher resistance against the repeatedly applied external force. The results are shown in Table 2 together with blending conditions of the rubber.

Table 2

| | | Invention Run 1 | Comparison Run 1 | Invention Run 2 | Comparison Run 2 |
|---|---|---|---|---|---|
| Compound Formulation (parts by weight) | NR (RSS #1) | 100 | 100 | 70 | 70 |
| | BR (JSR BR-01) | - | - | 30 | 30 |
| | FEF Carbon | 40 | 40 | 40 | 40 |
| | Zinc oxide | 5 | 5 | 5 | 5 |
| | Stearic acid | 1 | 1 | 1 | 1 |
| | Process oil | 10 | 10 | 10 | 10 |
| | Compound F | 1 | - | 1 | - |
| | Vulcanization accelerator * | 1 | 1 | 1 | 1 |
| | Sulfur | 2 | 2 | 2 | 2 |
| | Antioxidant** | 2 | 2 | 2 | 2 |
| Vulcanizing period (min) | | 20 | 20 | 25 | 25 |
| Initial stress (kg/cm²) | | 55.0 | 55.0 | 70.0 | 68.5 |
| Stress after 40 min (kg/cm²) | | 51.0 | 42.5 | 64.0 | 52.5 |
| Retention (%) | | 92.7 | 77.3 | 91.4 | 76.6 |

* N-Cyclohexyl-2-benzothiazolylsulfenamide
** N-Phenyl-N′-(1,3-dimethylbutyl)-p-phenylenediamine

According to the present invention, lowering of the dynamic-to-static modulus ratios and improvements in durability of rubber vibration isolators can be attained while keeping other properties such as hardness and compression set similar to those of conventional rubber vibration isolators.

Furthermore, although there have hitherto been methods to improve flexural fatigue resistance of rubber, most of them cause the increase in dynamic-to-static modulus ratio. On the other hand, according to the present invention, not only the dynamic-to-static modulus ratio can be lowered but also the flexural fatigue resistance can be improved. That is, with respect to the initial flexural fatigue resistance, a part of the rubber compositions containing the dinitrodiamine of the present invention showed some reduction compared with the rubber compositions containing no dinitrodiamine, however, with reference to the flexural fatigue resistance after heat aging treatment, all of the rubber compositions containing the dinitrodiamine show clear improvements over those not containing the dinitrodiamine. In consideration that most of rubber vibration isolators are used in a high temperature, the rubber vibration isolators of the present invention being superior in the flexural fatigue resistance after subjected to a heat aging are recognized as extremely useful isolators.

Owing to these characteristics, the rubber vibration isolators provided by the present invention can be used as various rubber vibration isolators for automobiles such as engine mounts and the like and besides can be effectively employed for uses in the fields such as railway vehicles, construction vehicles, industrial machines and office automation machines where vibration causes problems.

## Claims

1. A method for improving rubber vibration isolator properties which comprises blending a natural rubber and/or a synthetic rubber with a filler and a dinitrodiamine compound represented by the formula of

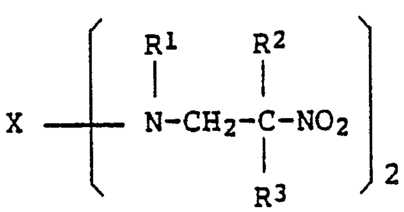

(I)

wherein X is a divalent aliphatic, alicyclic or aromatic group which may contain halogen or oxygen in the group, $R^1$ is hydrogen, an aliphatic group, an alicyclic group or an aromatic group, with the proviso that two nitrogen atoms linking through X may further link through $R^1$ when both X and $R^1$ are the aliphatic groups, and $R^2$ and $R^3$ independently of one another are each hydrogen or an alkyl of 1 to 12 carbon atoms, with the proviso that $R^2$ and $R^3$ may conjointly form a ring.

2. The method according to Claim 1, wherein the dinitrodiamine compound is the one where X is a divalent aliphatic group of 1 to 18 carbon atoms.

3. The method according to Claim 2, wherein X is a divalent aliphatic group of 4 to 12 carbon atoms.

4. The method according to claim 1, wherein the dinitrodiamine compound is the one where X is cyclohexylene,

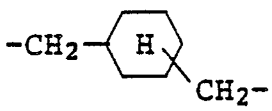 , or 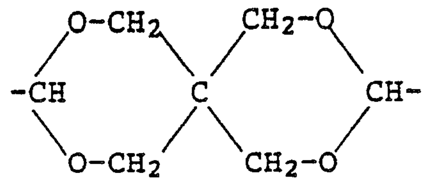 .

5. The method according to Claim 1, wherein the dinitrodiamine compound is the one where X is phenylene unsubstituted or substituted,

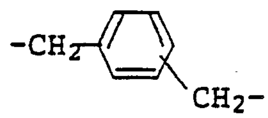 ,

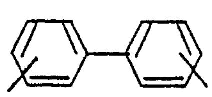 , 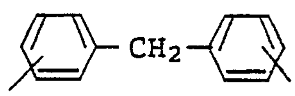 , 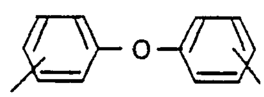 ,

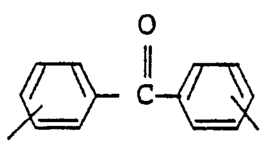

or naphthylene.

6. The method according to Claim 1, wherein the dinitrodiamine compound is the one where $R^1$ is hydrogen, an alkyl of 1 to 6 carbon atoms, cyclohexyl or phenyl.

7. The method according to Claim 6, wherein $R^1$ is hydrogen.

8. The method according to Claim 1, wherein the dinitrodiamine compound is the one where X, $R^1$ and two nitrogen atoms conjointly form a ring of

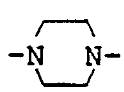 .

9. The method according to Claim 1, wherein the dinitrodiamine compound is the one where one of $R^1$ and $R^2$ is an alkyl of 1 to 12 carbon atoms.

10. The method according to Claim 9, wherein $R^2$ and $R^3$ are both methyl.

11. The method according to Claim 1, wherein the dinitrodiamine compound is the one where $R^2$ and $R^3$ together with a carbon atom bonding thereto conjointly form a six-membered ring.

12. The method according to Claim 1, wherein the dinitrodiamine compound is used in an amount of 0.1 to 10 parts by weight per 100 parts by weight of the rubber.

13. The method according to Claim 1, wherein the rubber is a natural rubber or a polymer blend mainly composed of a natural rubber.

14. The method according to Claim 1, wherein the filler is carbon black.

15. A method for improving the durability of a rubber as well as lowering a dynamic-to-static modulus ratio of the rubber, which comprises blending a natural rubber and/or a synthetic rubber with a filler and a dinitrodiamine compound represented by the formula of

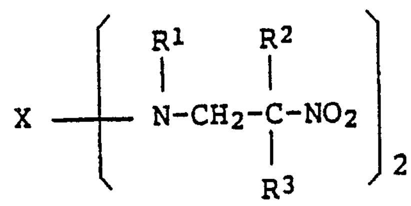

(I)

wherein X is a divalent aliphatic, alicyclic or aromatic group which may contain halogen or oxygen in the group, $R^1$ is hydrogen, an aliphatic group, an alicyclic group or an aromatic group, with the proviso that two nitrogen atoms linking through X may further link through $R^1$ when both X and $R^1$ are the aliphatic groups, and $R^2$ and $R^3$ independently of one another are each hydrogen or an alkyl of 1 to 12 carbon atoms, with the proviso that $R^2$ and $R^3$ may conjointly form a ring.

16. A rubber vibration isolator lowered in the dynamic-to-static modulus ratio and improved in the durability which is prepared by the method of Claim 1.